# EUROPÄISCHE PATENTSCHRIFT

(11) **EP 1 224 063 B1**
(45) Veröffentlichungstag und Bekanntmachung des Hinweises auf die Patenterteilung: **02.07.2003**
(21) Anmeldenummer: 00945522.1
(22) Anmeldetag: 13.04.2000
(51) Int. Cl.: B24D 5/02, B24D 17/00, A61C 3/02

(54) **INSTRUMENT ZUM ZERSPANENDEN BEARBEITEN VON WERKSTÜCKEN UND WERKSTOFFEN**
INSTRUMENT FOR MACHINING WORKPIECES AND MATERIALS
INSTRUMENT POUR L'USINAGE DE PIECES ET DE MATERIAUX

(30) Priorität: 27.09.1999 DE 29916917 U
(43) Veröffentlichungstag der Anmeldung: 24.07.2002
(73) Patentinhaber: Hopf, Ringleb & CO. GmbH & CIE., 12203 Berlin (DE)
(72) Erfinder: ENGLING, Horst, D-37235 Hess.-Lichtenau (DE)
(74) Vertreter: Pfenning, Meinig & Partner GbR
(86) Internationale Anmeldenummer: DE0001222
(87) Internationale Veröffentlichungsnummer: WO01023142

(56) Entgegenhaltungen:
- EP-A- 0 288 614
- DE-A- 3 545 308
- US-A- 4 581 798
- US-A- 5 653 627
- US-A- 5 916 013

## Beschreibung

Die Erfindung betrifft ein Instrument zum Bearbeiten von Werkstücken und Werkstoffen nach dem Oberbegriff des Hauptanspruches (siehe z.B. US-A-5 653 627).

Zur Bearbeitung schwer zugänglicher, relativ enger Materialbestandteile von Werkstücken werden nach dem heutigen Stand der Technik meist Werkzeuge, wie Stahl-, Diamant- oder Hartmetallfräsen genutzt. Dies gilt auch in dem Fall, daß Material abgetrennt werden muß, das heißt, daß eine Zerspanung des abzutrennenden Materials nicht unbedingt notwendig ist. Zum Abtrennen sind Schleifscheiben bekannt, diese sind jedoch nur in einer Tiefe bis zur Aufnahme der Scheibe, dem Schleifscheibendorn möglich. In diesem Fall ist die Eindringtiefe begrenzt.

In der Zahntechnik wird häufig mit Gips oder Hartgips ein Abbild des Zahnkranzes angefertigt, der zur Weiterbearbeitung hinsichtlich der Herstellung einzelner Zähne störend den Lingualbereich mitabbildet. Dieser wird üblicherweise mit Hartmetallfräsen entfernt, wobei erhebliche Mengen von Staub anfallen.

Der Erfindung liegt die Aufgabe zugrunde, ein Instrument zum Bearbeiten von Werkstücken zu schaffen, das ein Werkzeug und einen Schaft aufweist, wobei das Werkstück auch in Eindringtiefen bearbeitbar sein soll, die nicht durch den Schaft begrenzt sind.

Diese Aufgabe wird erfindungsgemäß durch die Merkmale des Hauptanspruches gelöst.

Entsprechend der Erfindung ist ein Schleifen oder Zerspanen über eine durch einen Schaft als Anschlag gekennzeichnete Tiefe dadurch möglich, daß der Schaft selbst, der mit einer Antriebsvorrichtung verbindbar ist, außerhalb des Befestigungsbereiches mit abrasiven Elementen wie einem Schleifbelag, mit Schneid-, Säge- und/oder Fräselementen versehen ist. Dadurch wird eine zerspanende Bearbeitung über den Anschlag hinaus ermöglicht. Der Schaft schleift, feilt oder fräst sich in das zu bearbeitende Material hinein. Das Werkzeug, das als Scheibe, Scheibensegment, Formkörper, wie ein Flachzylinder oder als Balken ausgebildet ist, ist in seinem Einsatz nicht mehr auf den Anschlag, der durch den Schaft gebildet wird, begrenzt. Die zu entfernenden Materialteile werden nicht mehr komplett zerspant oder zerschliffen, sondern im wesentlichen abgetrennt und nur im Schaftbereich findet noch eine vollständige Zerspanung oder ein Zerschleifen des zu entfernenden Materials statt. Der Zeitaufwand für die notwendige Arbeit ist dadurch geringer und die Umwelt wird mit weniger Staub oder kleinen Spänen belastet.

Dies gelingt beispielsweise auch bei der Bearbeitung eines Modells eines Gebisses in der Zahntechnik, da Staub vermieden werden kann, wenn der von dem Abdruck zu entfernende Gipsblock insbesondere im Lingualbereich abgeschnitten wird. Dabei wird das vorzugsweise als Scheibe ausgebildete Werkzeug von der offenen Seite angesetzt, bis zum Anschlag hineingeschliffen und von dort an mit der Scheibe und dem abrasiv belegten Schaft weiter in das Material hineingeschliffen oder geschnitten, gesägt, gefeilt oder gefräst.

Durch die in den Unteransprüchen angegebenen Maßnahmen sind weitere vorteilhafte Weiterbildungen und Verbesserungen möglich.

Ausführungsbeispiele der Erfindung sind in der Zeichnung dargestellt und werden in der nachfolgenden Beschreibung näher erläutert. Es zeigen:
- Figur 1: eine perspektivische Ansicht auf das erfindungsgemäße Instrument nach einem ersten Ausführungsbeispiel,
- Figur 2: eine Seitenansicht auf das erfindungsgemäße Instrument nach einem zweiten Ausführungsbeispiel,
- Figur 3: eine schematische Ansicht auf das erfindungsgemäße Instrument während eines Bearbeitungsvorganges,
- Figur 4: eine perspektivische Ansicht auf einem bei dem erfindungsgemäßen Instrument verwendeten Schaft mit aufgeschobener und beliebig befestigter Hülsenform gemäß einem weiteren Ausführungsbeispiel,
- Figur 5: eine Seitenansicht auf das erfindungsgemäße Instrument nach einem vierten Ausführungsbeispiel, und
- Figur 6: eine Teilansicht auf das erfindungsgemäße Instrument nach einem fünften Ausführungsbeispiel.

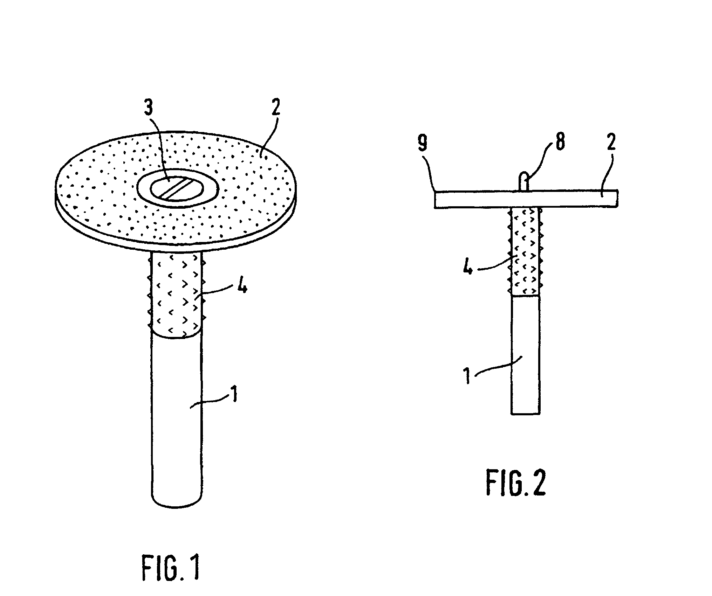

Das in Figur 1 dargestellte Instrument besteht aus einem Schaft 1 und einem Werkzeugteil, das im dargestellten Ausführungsbeispiel als Scheibe 2 ausgebildet ist. Die Scheibe 2 ist mittels einer Schraube 3 an dem Schaft 1 befestigt. Der Schaft 1 wird in das Handstück einer Antriebsvorrichtung eingesteckt, die den Schaft in rotierende oder in eine teilkreisförmig oszillierende Bewegung versetzt.

Die Schleifscheibe ist auf ihrer Oberseite und/oder Unterseite mit abrasiven Elementen, im dargestellten Ausführungsbeispiel mit Schleifelementen versehen, wobei die Schleifelemente als Diamant-, Korund-, Glas- oder sonstigen Schleifkörnern ausgebildet sind, die als Beschichtung oder Belegung auf dem scheibenförmigen Träger aufgebracht oder in diesen eingebettet oder mit diesem durchsetzt sind. Beliebig angeordnete und geformte Löcher im Trägermaterial oder Aussparungen im abrassiven Bereich können den "Spanraum" und damit die Schnittgeschwindigkeit erhöhen. Der scheibenförmige Träger kann dabei aus Kunststoff, Metall oder auch als drahtförmiger Körper ausgebildet sein. Die Oberseite und ggf. die Unterseite der Scheibe 2 sind eben, wobei die Schraube 3 bündig darüber- oder darunterliegend, zu der Scheibenoberfläche liegt und ggf. auch mit abrasivem Material angeordnet sein kann.

Der Schaft 1 ist über einen bestimmten Höhenbereich 4 vorzugsweise kurz über seiner Einspannstelle bis zur Scheibe 2 gleichfalls mit abrasiven Elementen bzw. abrasivem Material belegt, das in der Darstellung ebenfalls ein Schleifmaterial, wie Diamant, Korund, Glas, Kunststoff und/oder Metall sein kann.

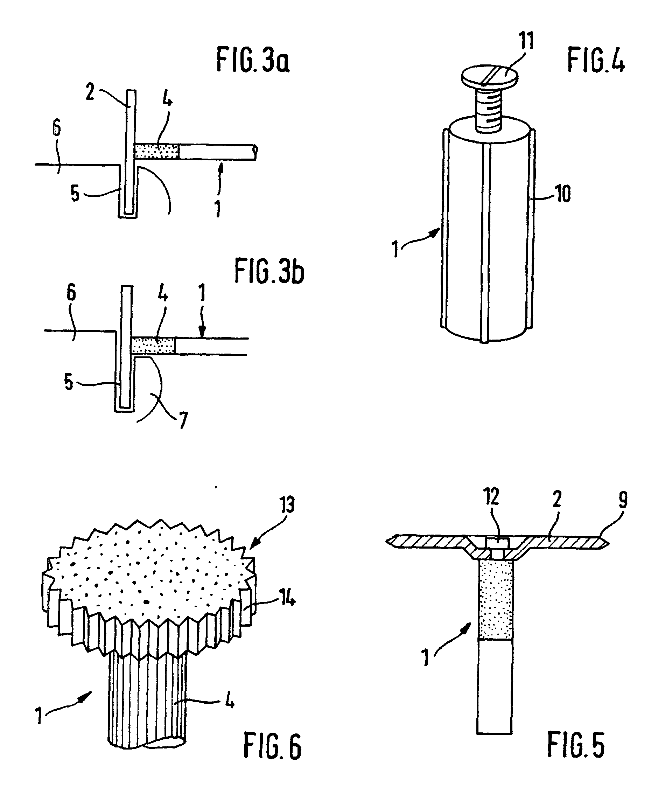

In Figur 3 ist die Arbeitsweise des Instruments nach der Erfindung dargestellt und in Figur 3a) ist zu erkennen, daß die Schleifscheibe 2 eine Nut 5 in das zu bearbeitende Material 6 entsprechend einer gewissen Tiefe eingearbeitet hat. Dabei kommt der Schleifbereich 4 des Schafts 1 noch nicht mit dem Material 6 in Berührung. In Figur 3b) hat das Instrument bzw. die Schleifscheibe 2 eine Nut 5 mit solcher Tiefe in das Material 6 geschliffen, daß auch der am Schaft 1 vorgesehene Schleifbereich 4 mit dem Material 6 in Berührung kommt und dieses zerspant bzw. abschleift. Bei noch weiterer Bearbeitung in gleicher Richtung wird das überschüssige Material 7 abgetrennt.

In Figur 2 ist ein weiteres Ausführungsbeispiel dargestellt, bei dem die Scheibe 2 einstückig mit dem Schaft 1 verbunden ist. Dabei kann die Scheibe durch Schweißen, Nieten, Schrauben oder dergleichen mit dem Schaft 1 verbunden sein oder Scheibe 2 und Schaft 1 sind aus einem Stück gefertigt. Die Scheibe 2 ist auf ihrer Oberseite mit einem zentrischen Nippel 8 versehen, der in dem zu bearbeitenden Werkstück eine Riefe erzeugt. Selbstverständlich können weitere Erhöhungen oder Vertiefungen auf der Scheibe 2 vorgesehen sein. Weiterhin kann je nach Anwendungszweck die Kante 9 mit Zähnen oder Schneiden ausgebildet sein, so daß sie als Säge oder Fräse dienen kann. In entsprechender Weise können Ober- und/oder Unterfläche der Scheibe mit Verzahnungen, Schneiden oder dergleichen versehen sein. Weiterhin können beliebig geformte Einschnitte in den Flächen vorgesehen werden, die zur Staubaufnahme dienen.

In Figur 4 ist ein hülsenförmiger Schaft 1 dargestellt, der auf eine Achse oder einen Mandrell einer Antriebsvorrichtung aufsteckbar ist und über Friktionstechniken oder andere Verbindungsarten mit diesen fest verbindbar ist. In diesem dargestellten Ausführungsbeispiel weist der als Hülse ausgebildete Schaft 1 Schneiden 10 entsprechend einem Fräser auf. Eine mit Schleif-, Fräs- oder Sägeelementen versehene Scheibe entsprechend den obigen Ausführungen ist über eine Schraube 11 mit dem hülsenartigen Schaft 1 verbindbar. Selbstverständlich kann auch die Hülse anstelle der Schneiden 10 mit anderen abrasiven Elementen versehen sein. In einer anderen Ausführungsform wird die Hülse nicht als eigentlicher Schaft verwendet, sondern auf den Schaft des Instruments aufgesteckt und mit dem Schaft verbunden.

Figur 5 zeigt eine weitere Ausführungsform des Instrumentes nach der Erfindung, wobei hier die Scheibe 2 mittig vertieft, d.h. dreidimensional verformt ist. Dadurch kann eine Schraube oder ein sonstiges Befestigungsmittel 12 aufgesetzt werden, wobei sie bündig mit der Oberfläche der Scheibe 2 abschließt. Außerdem wird durch die Verformung die Biegesteifigkeit erhöht. Die Kante 9 der Scheibe 2 ist hier als Messer ausgebildet.

In Figur 6 ist noch ein weiteres Ausführungsbeispiel dargestellt, bei dem das Werkzeugteil als zylindrischer Körper 13 ausgebildet ist, der auf seiner Ober- und/oder Unterseite mit Schleifmittel belegt ist und auf dem Umfang 14 Fräselemente zur Bildung eines Fräsers aufweist. Der abrasive Bereich 4 des Schaftes ist mit Messern oder Schneiden versehen.

In den dargestellten Ausführungsformen ist das Werkzeugteil als runde Scheibe oder runder flacher Körper dargestellt. Selbstverständlich kann das Werkzeugteil auch eine andere Umfangsform, beispielsweise als Polygon ausgeführt sein und es sind jedoch auch andere als scheibenförmige Körper anwendbar. Insbesondere für eine oszillierende Bewegung kommt als Werkzeugteil ein Scheibensegment mit den oben beschriebenen Eigenschaften, aber auch ein rotierender Balken mit Messern, Schneiden und/oder Schleifelementen in Betracht.

## Patentansprüche

1. Dentalinstrument zum zerspanenden Bearbeiten von Werkstücken mit einem mit abrasiven Elementen versehenen Werkzeug und einem Schaft, der mit einer Antriebsvorrichtung verbindbar ist, die das Werkzeug in eine rotierende oder oszillierende Bewegung versetzt, **dadurch gekennzeichnet, daß** der Schaft zumindest über einen Teilbereich mit abrasiven Elementen versehen ist und das Werkzeug als Scheibe (2) oder Scheibensegment ausgebildet ist, welche sich senkrecht zum Schaft erstrecken und, deren Oberflächen zumindest teilweise mit den abrasiven Elementen versehen sind.

2. Dentalinstrument nach Anspruch 1, **dadurch gekennzeichnet, daß** die abrasiven Elemente als Schleif-, Schneid-, Säge- und/oder Fräselemente ausgebildet sind, die jeweils einzeln oder in Kombination an dem Werkzeug und/oder dem Schaft (1) vorgesehen sind.

3. Instrument nach Anspruch 2, **dadurch gekennzeichnet, daß** Werkzeug (2, 13) und Schaft unterschiedliche abrasive Elemente aufweisen.

4. Instrument nach einem der Ansprüche 1 bis 3, **dadurch gekennzeichnet, daß** die Schleifelemente in Form von Diamant, Korund oder anderen Schleifmaterialien ausgebildet sind, wobei das Werkzeug (2, 13) und/oder der Schaft (1) mit den Schleifmaterialien belegt, beschichtet und/oder durchsetzt sind.

5. Instrument nach einem der Ansprüche 1 bis 4, **dadurch gekennzeichnet, daß** das Werkzeug (2, 13) und der Schaft (1) einstückig miteinander verbunden sind.

6. Instrument nach einem der Ansprüche 1 bis 4, **dadurch gekennzeichnet, daß** das Werkzeug (2, 13) und der Schaft (1) lösbar miteinander verbunden sind.

7. Instrument nach einem der Ansprüche 1 bis 6, **dadurch gekennzeichnet, daß** der Schaft (1) als Hülse ausgebildet ist.

8. Instrument nach einem der Ansprüche 1 bis 7, **dadurch gekennzeichnet, daß** die Schleifelemente an oder in einer Hülse aufgebracht sind, die auf dem Schaft (1) befestigbar ist.

9. Instrument nach einem der Ansprüche 1 bis 8, **dadurch gekennzeichnet, daß** das als Scheibe oder Scheibenelement ausgebildete Werkzeug dreidimensional verformt ist.

10. Instrument nach Anspruch 9, **dadurch gekennzeichnet, daß** die Scheibe oder das Scheibensegment mittig eine Vertiefung aufweist, in der ein Befestigungselement für die Befestigung am Schaft (1) aufgenommen ist.

11. Instrument nach einem der Ansprüche 1 bis 10, **dadurch gekennzeichnet, daß** das als Scheibe oder Scheibensegment ausgebildete Werkzeug eine oder mehrere Erhebungen (8) aufweist.

## Claims

1. Dental instrument for machining workpieces comprising a tool provided with abrasive elements and a shaft which is connectable to a drive mechanism which rotates or oscillates the tool, **characterised in that** the shaft is at least over a partial area provided with abrasive elements, and the tool is designed as a disc (2) or disc segment which extends perpendicularly to the shaft and the surfaces of which are at least partially provided with the abrasive elements.

2. Dental instrument according to Claim 1, **characterised in that** the abrasive elements are designed as grinding, cutting, sawing and/or milling elements which are respectively provided on the tool and/or the shaft (1) individually or in a combination.

3. Instrument according to Claim 2, **characterised in that** the tool (2, 13) and shaft have different abrasive elements.

4. Instrument according to one of Claims 1 to 3, **characterised in that** the grinding elements are designed in the shape of a diamond, corundum or other grinding material, and the tool (2, 13) and/or the shaft (1) is covered, coated and/or saturated with the grinding materials.

5. Instrument according to one of Claims 1 to 4, **characterised in that** the tool (2, 13) and the shaft (1) are integrated with each other.

6. Instrument according to one of Claims 1 to 4, **characterised in that** the tool (2, 13) and the shaft (1) are detachably joined.

7. Instrument according to one of Claims 1 to 6, **characterised in that** the shaft (1) is designed as a sleeve.

8. Instrument according to one of Claims 1 to 7, **characterised in that** the grinding elements are mounted on or in a sleeve which is mountable on the shaft (1).

9. Instrument according to one of Claims 1 to 8, **characterised in that** the tool, designed as a disc or disc element, is three-dimensionally shaped.

10. Instrument according to Claim 9, **characterised in that** the disc or the disc segment comprises a central recess which accommodates a fastening element for fastening onto the shaft (1).

11. Instrument according to one of Claims 1 to 10, **characterised in that the** tool, designed as a disc or disc element, comprises one or more elevations (8).

## Revendications

1. Instrument de dentisterie pour l'usinage, avec formation de copeaux, de pièces comportant un outil équipé d'éléments abrasifs, et une tige, qui peut être reliée à un dispositif d'entraînement qui amène l'outil à se déplacer selon un mouvement rotatif ou oscillatoire, **caractérisé en ce qu'**au moins une partie de la tige est pourvue d'éléments abrasifs et que l'outil est agencé sous la forme d'une meule (2) ou d'un segment de meule, qui s'étend perpendiculairement à la tige et dont les surfaces sont pourvues au moins en partie des éléments abrasifs.

2. Instrument de dentisterie selon la revendication 1, **caractérisé en ce que** les éléments abrasifs sont agencés sous la forme d'éléments de meule, de coupe, de scie et/ou de fraise, qui sont prévus respectivement individuellement ou en combinaison sur l'outil et/ou sur la tige (1).

3. Instrument selon la revendication 2, **caractérisé en ce que** l'outil (2, 13) et la tige possèdent des éléments abrasifs différents.

4. Instrument selon l'une des revendications 1 à 3, **caractérisé en ce que** les éléments de meule sont formés par du diamant, du corindon ou d'autres matériaux de meulage, l'outil (2, 13) et/ou la tige (1) étant garnis, recouverts et/ou imprégnés par les matériaux de meulage.

5. Instrument selon l'une des revendications 1 à 4, **caractérisé en ce que** l'outil (2, 13) et la tige (1) sont reliés entre eux d'un seul tenant.

6. Instrument selon l'une des revendications 1 à 4, **caractérisé en ce que** l'outil (2, 13) et la tige (1) sont reliés entre eux de façon amovible.

7. Instrument selon l'une des revendications 1 à 6, **caractérisé en ce que** la tige (1) est agencée sous la forme d'une douille.

8. Instrument selon l'une des revendications 1 à 7, **caractérisé en ce que** les éléments de meule sont montés sur ou dans une douille, qui peut être fixée sur la tige (1).

9. Instrument selon l'une des revendications 1 à 8, **caractérisé en ce que** l'outil agencé sous la forme d'une meule ou d'un élément de meule est déformé de façon tridimensionnelle.

10. Instrument selon la revendication 9, **caractérisé en ce que** la meule ou le segment de meule comporte en son centre un renfoncement, dans lequel est logé un élément de fixation servant à réaliser la fixation sur la tige (1).

11. Instrument selon l'une dès revendications 1 à 10, **caractérisé en ce que** l'outil agencé sous la forme d'une meule ou d'un segment de meule comporte un ou plusieurs bossages (8).
